# EUROPEAN PATENT APPLICATION

(11) **EP 3 418 947 A1**
(43) Date of publication of application: **26.12.2018**
(21) Application number: 18176709.6
(22) Date of filing: 08.06.2018
(51) Int. Cl.: G06K 9/62, G06K 9/00, G06K 9/32

(54) **COMPUTER IMPLEMENTED DETECTING METHOD, COMPUTER IMPLEMENTED LEARNING METHOD, DETECTING APPARATUS, LEARNING APPARATUS, DETECTING SYSTEM, AND RECORDING MEDIUM**

(30) Priority: 23.06.2017 JP 2017123137
(71) Applicant: Panasonic Intellectual Property Corporation of America, Torrance, CA 90503 (US)
(72) Inventor: TANIGAWA, Toru, Osaka, 540-6207 (JP); SHODA, Yukie, Osaka, 540-6207 (JP); IMOMOTO, Seiya, Osaka, 540-6207 (JP)
(74) Representative: Eisenführ Speiser

(57) **Abstract**

A moving body detecting method for, by means of at least one computer, detecting a target moving body that is a moving body which possibly constitutes an obstacle to running of a target vehicle includes acquiring a photographed image that is generated by photographing with a camera situated on board the target vehicle. Next, the photographed image is inputted as input data into a recognition model for recognizing a moving body in an image taken of the moving body, type information indicating a type of the moving body, and position information indicating that one of a plurality of positions including a sidewalk and a roadway in which the moving body is present. Then, the target moving body in the photographed image is detected by acquiring the type information and position information of the moving body in the photographed image as outputted from the recognition model.

## Description

### BACKGROUND

### 1. Technical Field

The present disclosure relates to a computer implemented detecting method, a computer implemented learning method, a detecting apparatus, a learning apparatus, a detecting system, and a recording medium.

### 2. Description of the Related Art

Automotive drive assist technologies and automatic vehicle-control technologies are being developed. These technologies require a technology for photographing an area around a vehicle with an onboard camera, recognizing an object located around the vehicle, and detecting a moving body that possibly constitutes an obstacle to the running of the vehicle.

According to Japanese Patent No. 4967015, a phenomenon that induces a change in speed of a moving body such as a pedestrian and a change in speed of a moving body are detected. Moreover, a moving body whose change in speed has been detected is detected as a moving body that possibly constitutes an obstacle to the running of a vehicle.

### SUMMARY

However, it is not always the case that a moving body whose change in speed has been detected by the technology disclosed in Japanese Patent No. 4967015 constitutes an obstacle to the running of the vehicle. That is, the technology disclosed in Japanese Patent No. 4967015 is undesirably low in accuracy of detection of a moving body that possibly constitutes an obstacle to the running of the vehicle.

One non-limiting and exemplary embodiment provides a moving body detecting method that makes it possible to more highly accurately detect a moving body that possibly constitutes an obstacle to the running of a vehicle.

In one general aspect, the techniques disclosed here feature a moving body detecting method for, by means of at least one computer, detecting a target moving body that is a moving body which possibly constitutes an obstacle to running of a target vehicle, including: acquiring a photographed image that is generated by photographing with a camera situated on board the target vehicle; and detecting the target moving body in the photographed image by acquiring type information and position information of a moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present.

The moving body detecting method according to the aspect of the present disclosure makes it possible to more highly accurately detect a moving body that possibly constitutes an obstacle to the running of the vehicle.

It should be noted that general or specific embodiments may be implemented as a system, a method, an integrated circuit, a computer program, a computer-readable storage medium such as a CD-ROM, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram showing a configuration of a moving body detecting system according to Embodiment 1;
Fig. 2 is a block diagram showing a functional configuration of a server according to Embodiment 1;
Fig. 3 is an explanatory diagram showing an example of an image that is stored in an image storage according to Embodiment 1;
Fig. 4 is an explanatory diagram showing training data according to Embodiment 1;
Fig. 5 is an explanatory diagram showing annotations that are added by an annotation adder according to Embodiment 1;
Fig. 6 illustrates explanatory diagrams showing a concept of learning of moving bodies according to Embodiment 1;
Fig. 7 is a block diagram showing a functional configuration of a vehicle according to Embodiment 1;
Fig. 8 is a flow chart showing a process that is performed by the server according to Embodiment 1;
Fig. 9 is a flow chart showing a process that is performed by onboard equipment according to Embodiment 1;
Fig. 10 is an explanatory diagram showing a target of detection of a moving body detecting system according to Embodiment 2;
Fig. 11 is an explanatory diagram showing annotations that are added by an annotation adder according to Embodiment 2;
Fig. 12 is a flow chart showing a process that is performed by a server according to Embodiment 2;
Fig. 13 is a flow chart showing a process that is performed by onboard equipment according to Embodiment 2;
Fig. 14 is a flow chart showing a moving body learning method according to a modification of each of the embodiments;
Fig. 15 is a block diagram showing a moving body learning apparatus according to a modification of each of the embodiments;
Fig. 16 is a flow chart showing a moving body detecting method according to a modification of each of the embodiments;
Fig. 17 is a block diagram showing a moving body detecting apparatus according to a modification of each of the embodiments;
Fig. 18 is a flow chart showing a moving body detecting method according to a modification of each of the embodiments; and
Fig. 19 is a block diagram showing a moving body detecting system according to a modification of each of the embodiments.

### DETAILED DESCRIPTION

A moving body detecting method according to an aspect of the present disclosure is a moving body detecting method for, by means of at least one computer, detecting a target moving body that is a moving body which possibly constitutes an obstacle to running of a target vehicle, including: acquiring a photographed image that is generated by photographing with a camera situated on board the target vehicle; and detecting the target moving body in the photographed image by acquiring type information and position information of a moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present.

According to the foregoing aspect, a target moving body in a taken image is detected on the basis of a recognition model. Since this recognition model makes it possible to recognize a moving body in an image in which the moving body is shown and the type and position of the moving body, the target moving body in the photographed image can be more highly accurately detected by inputting the photographed image into this recognition model. Thus, this moving body detecting method makes it possible to more highly accurately detect a target moving body that possibly constitutes an obstacle to the running of the vehicle.

For example, the recognition model may be one constructed by: acquiring training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; and learning the type information and position information of the moving body in the image with use of the training data.

According to the foregoing aspect, a recognition model constructed with use of training data to which annotations have been added, i.e. a recognition model constructed by learning the type and position of a moving body in an image in which the moving body is shown, is used. That is, the type and position of the moving body shown in the image are taught into the recognition model. For example, the type and position of a moving body is learned on the basis of the features, such as shape or color, of the moving body shown in an image, an image of the background of the moving body, or the like. Therefore, by inputting a photographed image into the recognition model, the type and position of a moving body in the photographed image thus inputted are appropriately detected. This may contribute to more highly accurate detection of a target moving body.

For example, in detecting the target moving body, the target moving body in the photographed image may be detected by acquiring the type information indicating that the moving body in the photographed image is a person and the position information indicating that the moving body is present on the roadway.

According to the foregoing aspect, more specifically, a person located on a roadway in a photographed image is detected as a target moving body that possibly constitutes an obstacle to the running of the vehicle.

For example, in detecting the target moving body, the target moving body in the photographed image may be detected by acquiring the type information indicating that the moving body in the photographed image is a an automobile, a motorcycle, or a bicycle and the position information indicating that the moving body is present on the sidewalk.

According to the foregoing aspect, more specifically, an automobile, a motorcycle, or a bicycle located on a sidewalk in a photographed image is detected as a target moving body that possibly constitutes an obstacle to the running of the vehicle.

For example, in acquiring the photographed image, a plurality of the photographed images serially taken on a time-series basis may be acquired. In acquiring the training data, (d) the training data to which the annotations including identification information of the moving body have been added may be further acquired. The recognition model may be constructed by further learning, with use of the training data, a preliminary action that is a predetermined action which the moving body takes a predetermined period of time before the moving body becomes an obstacle to the running of the vehicle. In detecting the moving body, the target moving body in the plurality of photographed images may be detected by further acquiring action information indicating the presence or absence of the preliminary action of the moving body in the plurality of photographed images, the action information being outputted by inputting the plurality of photographed images as input data into the recognition model.

According to the foregoing aspect, a target moving body in a photographed image is detected on the basis of a recognition model constructed by learning with further use of a preliminary action of a moving body. Since identification information of the moving body has been further added, this recognition model is one constructed by learning the preliminary action on the basis of an action of the moving body across a plurality of images. That is, in addition to the type and position of a moving body shown in an image, a preliminary action of the moving body is taught into the recognition model. For example, a preliminary action (more specifically, a head-rotating action of a person, deceleration or stoppage of walking or running, blinking of a lamp of an automobile, or a similar action) of a moving body shown across a plurality of images and a movement (more specifically, a movement of a person from a sidewalk toward a roadway, a movement of an automobile from another running lane into the running lane of the vehicle, or a similar movement) of the moving body are taught. Therefore, by inputting a photographed image into the recognition model, the type, the position, and the presence or absence of a preliminary action of a moving body in the photographed image thus inputted are appropriately detected. This may contribute to more highly accurate detection of a target moving body.

For example, in detecting the target moving body, the target moving body in the photographed image may be detected by acquiring the type information indicating that the moving body in the photographed image is a person, the position information indicating that the moving body is present on the sidewalk, and the action information indicating that the moving body is taking the preliminary action that the moving body takes the predetermined period of time before the moving body moves from the sidewalk onto the roadway.

According to the foregoing aspect, more specifically, a person who is about to move from a sidewalk onto a roadway in a photographed image is detected as a target moving body that possibly constitutes an obstacle to the running of the vehicle.

For example, in detecting the target moving body, the target moving body in the photographed image may be detected by acquiring the type information indicating that the moving body in the photographed image is an automobile or a motorcycle, the position information indicating that the moving body is present on the roadway, and the action information indicating that the moving body is taking the preliminary action that the moving body takes the predetermined period of time before the moving body enters a running lane of the target vehicle in an area ahead of the target vehicle.

According to the foregoing aspect, more specifically, an automobile or the like that is about to enter the running lane of the target vehicle in a photographed image is detected as a target moving body that possibly constitutes an obstacle to the running of the vehicle.

For example, the recognition model may be a neural network model.

According to the foregoing aspect, more specifically, a moving body that possibly constitutes an obstacle to the running of the vehicle can be more highly accurately detected by using a neural network model as a recognition model.

For example, the information indicated by the annotations and indicating the type of the moving body may be information indicating whether the moving body is a person, an automobile, a motorcycle, or a bicycle.

According to the foregoing aspect, more specifically, a target moving body that possibly constitutes an obstacle to the running of the vehicle can be more highly accurately detected by using, as information indicated by annotations and indicating the type of a moving body, information indicating whether the moving body is a person, an automobile, a motorcycle, or a bicycle.

Further, a moving body learning method according to an aspect of the present disclosure is a moving body learning method for, by means of at least one computer, detecting a target moving body that is a moving body which possibly constitutes an obstacle to running of a target vehicle, including: acquiring training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; and constructing a recognition model by learning the type information and position information of the moving body in the image with use of the training data.

According to the foregoing aspect, with use of training data to which annotations have been added, a recognition model is constructed by learning the type and position of a moving body in an image in which the moving body is shown. That is, a recognition model into which the type and position of a moving body shown in an image have been taught is constructed. Accordingly, use of this recognition model makes it possible to more highly accurately detect a target moving body that possibly constitutes an obstacle to the running of the vehicle.

For example, in acquiring the training data, the training data is acquired which is obtained by adding, to each of a plurality of the images taken of the moving body, the annotations including (a) the coordinates, (b) the type information, (c) the position information, and (d) identification information that makes the moving body uniquely identifiable, and in constructing the recognition model, the recognition model may be constructed by further learning, with use of the training data, a preliminary action that the moving body takes a predetermined period of time before the moving body becomes an obstacle to the running of the vehicle.

According to the foregoing aspect, a recognition model is constructed by learning with further use of a preliminary action of a moving body. Since identification information of the moving body has been further added, this recognition model is constructed by learning the preliminary action on the basis of an action of the moving body across a plurality of images. Accordingly, use of this recognition model makes it possible to more highly accurately detect a target moving body that possibly constitutes an obstacle to the running of the vehicle.

For example, of the plurality of images included in the training data, an image taken of a person crossing a running lane may be one to which annotations further including preliminary action information have been added, the preliminary action information indicating that a moving body taking a preliminary action is included.

According to the foregoing aspect, in learning the type, position, and preliminary action of a moving body, a recognition model is constructed by learning with use of training data obtained by adding annotations including preliminary action information to an image including a person crossing a running lane. This makes it possible to, by recognizing the behavior of a person who is about to step onto a roadway, preliminarily predict someone running out onto a roadway.

For example, the position information included in the annotations included in the training data may indicate those two or more of the positions including the sidewalk and the roadway in which the moving body is present.

According to the foregoing aspect, by using a plurality of positions as the position of a moving body indicated by annotations, the position information of a moving body that is present across a plurality of positions can be more highly accurately learned.

For example, the coordinates of the moving body may include coordinates indicating a region surrounding the moving body in the image including a background.

According to the foregoing aspect, a region surrounding a moving body and its background is used as the position of the moving body indicated by annotations, and the position of the moving body is learned on the basis of an image of the moving body including the background. Since the background of the moving body includes information indicating the position of the moving body, the position information of the moving body can be more highly accurately learned by learning the position of the moving body on the basis of the image of the moving body including the background.

Further, a moving body detecting apparatus according to an aspect of the present disclosure is a moving body detecting apparatus for, by means of at least one computer, detecting a target moving body that is a moving body which possibly constitutes an obstacle to running of a target vehicle, including: a photographed image acquirer that acquires a photographed image that is generated by photographing with a camera situated on board the target vehicle; and a detector that detects the target moving body in the photographed image by acquiring type information and position information of the moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present.

The foregoing aspect brings about effects similar to those of the foregoing moving body detecting method.

Further, a moving body learning apparatus according to an aspect of the present disclosure is a moving body learning apparatus in which at least one computer learns a target moving body that is a moving body which possibly constitutes an obstacle to running of a vehicle, including: a training data acquirer that acquires training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; and a learner that constructs a recognition model by learning the type information and position information of the moving body in the image with use of the training data.

The foregoing aspect brings about effects similar to those of the foregoing moving body learning method.

Further, a moving body detecting system according to an aspect of the present disclosure is a moving body detecting system for, by means of at least one computer, detecting a target moving body that is a moving body which possibly constitutes an obstacle to running of a target vehicle, including: a training data acquirer that acquires training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; a learner that constructs a recognition model by learning the type information and position information of the moving body in the image with use of the training data; a photographed image acquirer that acquires a photographed image that is generated by photographing with a camera situated on board the target vehicle; and a detector that detects the moving body in the photographed image by acquiring type information and position information of the moving body in the photographed image, the type information and position information of the moving body in the photographed image being outputted by inputting the photographed image as input data into a recognition model for recognizing a moving body that possibly constitutes an obstacle to the running of the vehicle, type information indicating a type of the moving body, and position information indicating that one of a plurality of positions including a sidewalk and a roadway in which the moving body is present.

The foregoing aspect brings about effects similar to those of the foregoing moving body detecting system.

Further, a program according to an aspect of the present disclosure is a program for a computer to learn a moving body that possibly constitutes an obstacle to running of a vehicle, which causes the computer to acquire training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present, and construct a recognition model by learning the type information and position information of the moving body in the image with use of the training data.

The foregoing aspect brings about effects similar to those of the foregoing moving body learning method.

It should be noted that general or specific embodiments may be implemented as a system, a method, an integrated circuit, a computer program, a computer-readable storage medium such as a CD-ROM, or any selective combination thereof.

The following describes embodiments in concrete terms with reference to the drawings.

It should be noted that each of the embodiments to be described below shows a general or specific example. The numerical values, the shapes, the materials, the constituent elements, the placement location and connection configuration of the constituent elements, the steps, the order of the steps, and the like that are shown in the following embodiments are mere examples and are not intended to limit the present disclosure. Further, those of the constituent elements in the following embodiments which are not recited in an independent claim representing the most generic concept are described as optional constituent elements.

### Embodiment 1

Embodiment 1 describes a moving body detecting apparatus, a moving body detecting system, and the like that make it possible to more highly accurately detect a moving body that possibly constitutes an obstacle to the running of a vehicle.

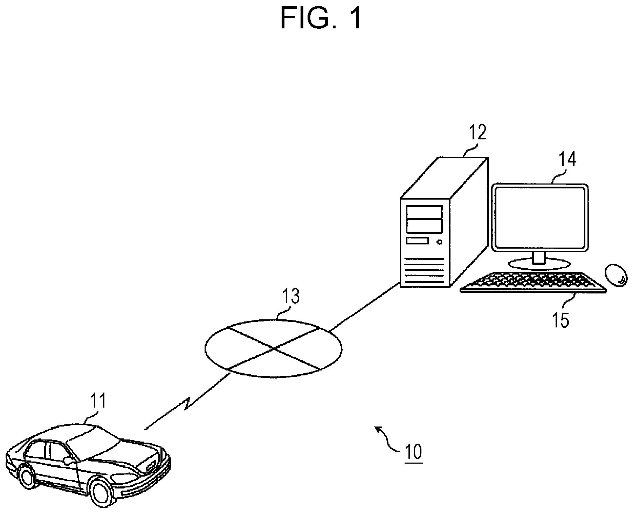

Fig. 1 is a block diagram showing a configuration of a moving body detecting system according to Embodiment 1.

A moving body detecting system 10 according to Embodiment 1 is a system composed of at least one computer and detects, from among moving bodies that are present in an area around a vehicle 11, which is a target vehicle, a moving body (also referred to as "target moving body") that possibly constitutes an obstacle to the running of the vehicle 11. Specifically, the moving body detecting system 10 includes onboard equipment 110 and a server 12. The onboard equipment 110 is situated on board the vehicle 11. The server 12 is connected to the onboard equipment 110 via a communication network 13 such as the Internet. It should be noted that although a technology with which the moving body detecting system 10 detects a target moving body that is present in the area around the vehicle 11 is described by taking, as an example, a case where the area around the vehicle 11 is an area ahead of the vehicle 11 toward which the vehicle 11 is traveling, this technology is also applicable to an area behind the vehicle 11 or areas on the right and left sides of the vehicle 11.

The onboard equipment 110 of the vehicle 11 includes a camera and generates an image by photographing with the camera. Moreover, in a case where there are moving bodies shown in the image, the onboard equipment 110 detects a target moving body from among the moving bodies shown. Examples of the moving bodies include persons, automobiles, motorcycles, and bicycles. The onboard equipment 110 detects the target moving body on the basis of recognition based on a recognition model. The recognition model that is used for the recognition is acquired from the server 12 via the communication network 13.

The server 12 is connected to a display device 14 and an input device 15 by means of cable communication or wireless communication. The display device 14 includes a liquid crystal display or an organic EL (electroluminescence) display and displays an image corresponding to control from the server 12. The input device 15 includes, for example, a keyboard and a mouse and outputs, to the server 12, an actuating signal corresponding to an input operation performed by a user.

Further, the server 12 acquires and stores images that are transmitted from a plurality of terminal apparatuses (not illustrated) via the communication network 13. Specifically, the terminal apparatuses transmit, to the server 12 via the communication network 13, images obtained by the taking of images with a camera situated on board, for example, the vehicle 11 or a vehicle other than the vehicle 11. Moreover, the server 12 uses, as training images, the images thus transmitted and constructs a recognition model by learning the types and positions of moving bodies in the training images. Moreover, the server 12 transmits the recognition model thus constructed to the vehicle 11 via the communication network 13.

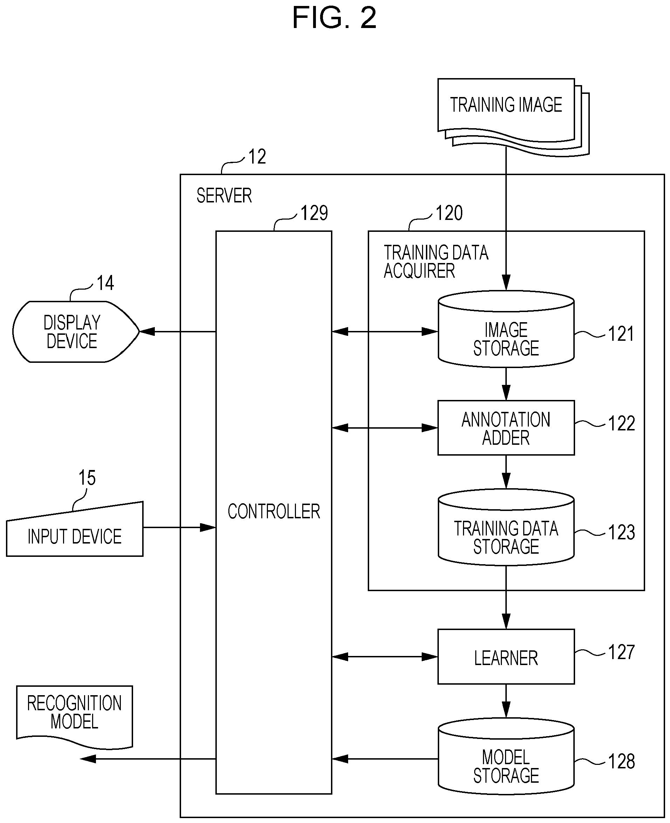

Fig. 2 is a block diagram showing a functional configuration of the server 12 according to Embodiment 1.

As shown in Fig. 2, the server 12 includes a training data acquirer 120, a learner 127, a model storage 128, and a controller 129.

The training data acquirer 120 acquires training data that is used for learning of detection of a target moving body. Specifically, the training data acquirer 120 acquires training data by adding, to an image in which a moving body is shown, annotations indicating the coordinates, type, and position of the moving body.

The training data acquirer 120 includes an image storage 121, an annotation adder 122, and a training data storage 123.

The image storage 121 is a recording medium, such as a RAM (random access memory) or a hard disk, onto which to record data. In the image storage 121, a plurality of images generated by the taking of images with the camera are for example stored as a plurality of training images.

The annotation adder 122 adds annotations to a training image. The annotations include the coordinates, type information, and position information of a moving body. The coordinates of the moving body are the coordinates (X, Y) of the moving body in the training image, and are coordinates in a coordinate system assuming, for example, that the image has its upper left corner at (0, 0), that the rightward direction is an X-axis positive direction, and that the downward direction is a Y-axis positive direction. The type information is information indicating the type of the moving body and, specifically, is information indicating whether the moving body is a person, an automobile, a motorcycle, a bicycle, or the like. The position information is information indicating that one of a plurality of positions including a sidewalk and a roadway in which the moving body is present. A roadway may be further subdivided into a side strip, an own-vehicle running lane (i.e. a running lane in which the vehicle 11 runs), an oncoming-vehicle running lane (i.e. a running lane in which a vehicle coming toward the vehicle 11 runs), a crosswalk, and a parking space located on the roadway (i.e. a parking space provided with a parking meter). The annotation adder 122 acquires an actuating signal from the input device 15 via the controller 129 and adds annotations to a training image in accordance with the actuating signal.

The annotation adder 122 may either automatically add annotations to a training image on the basis of an image analysis technology or similar technology or add annotations to a training image in accordance with an operation performed by a user. That is, the annotation adder 122 may automatically determine the coordinates, type, and position of a moving body in a training image by analyzing the training image. Alternatively, the annotation adder 122 may determine the coordinates, type, and position of a moving body by displaying a training image through the display device 14 and acquiring an actuating signal inputted to the input device 15 by a user who has seen the training image. It should be noted that the following description takes, as an example, a case where the annotation adder 122 adds annotations on the basis of the inputting of an actuating signal by a user who has seen a training image.

The annotation adder 122 may add, to a training image, annotations including position information indicating those two or more of positions including a sidewalk and a roadway in which a moving body is present. In other words, the position information included in the annotations included in the training data may be position information indicating those two or more of positions including a sidewalk and a roadway in which the moving body is present. This makes it possible to appropriately express the position information of a moving body that is present across a plurality of positions, making it possible to improve the accuracy of learning by the after-mentioned learner 127.

The training data storage 123 is a recording medium, such as an RAM or a hard disk, onto which to record data. In the training data storage 123, a training image to which annotations have been added is stored as training data.

The learner 127 learns the type and position of a moving body with use of training data. That is, the learner 127 constructs a recognition model by learning the type and position of a moving body in a training image with use of training data stored in the training data storage 123. The learner 127 stores the recognition model thus constructed in the model storage 128.

Learning by the learner 127 is machine learning such as deep learning (neural network), random forests, or genetic programming. Further, graph cuts or the like may be used for the recognition and segmentation of objects in an image. Alternatively, a recognizer or the like created by random forests or genetic programming may be used. Further, the recognition model that the learner 127 constructs may be a neural network model.

The recognition model that the learner 127 constructs is a recognition model for recognizing a moving body in an image taken of the moving body, type information indicating the type of the moving body, and position information indicating that one of a plurality of positions including a sidewalk and a roadway in which the moving body is present. More specifically, the recognition model is one constructed, for example, by acquiring training data obtained by adding annotations to an image taken of a moving body, the annotations being information including (a) the coordinates of the moving body in the image, (b) type information indicating the type of the moving body, and (c) position information indicating that one of a plurality of positions including a sidewalk and a roadway in which the moving body is present, and learning, with use of the training data thus acquired, the type information and position information of a moving body that possibly constitutes an obstacle to the running of the vehicle 11.

The model storage 128 is a recording medium, such as a RAM or a hard disk, onto which to record data. In this model storage 128, a recognition model constructed by the learner 127 is stored. The recognition model stored in the model storage 128 is provided to the onboard equipment 110 via the controller 129.

The controller 129 acquires an actuating signal from the input device 15 and controls the training data acquirer 120, the learner 127, and the display device 14 in accordance with the actuating signal. Further, the controller 129 provides the recognition model stored in the model storage 128 to the onboard equipment 110.

The following describes in detail a process of generating training data by adding annotations to a training image acquired by the training data acquirer 120 and storing the training data in the training data storage 123.

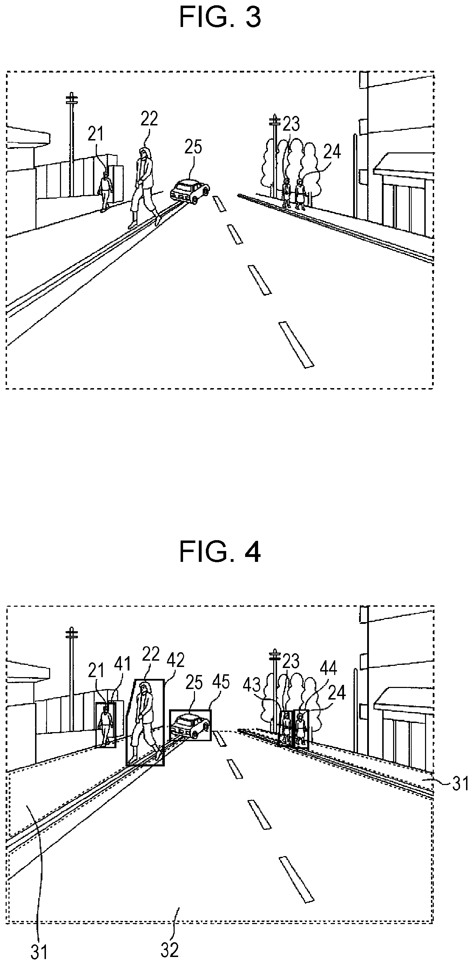

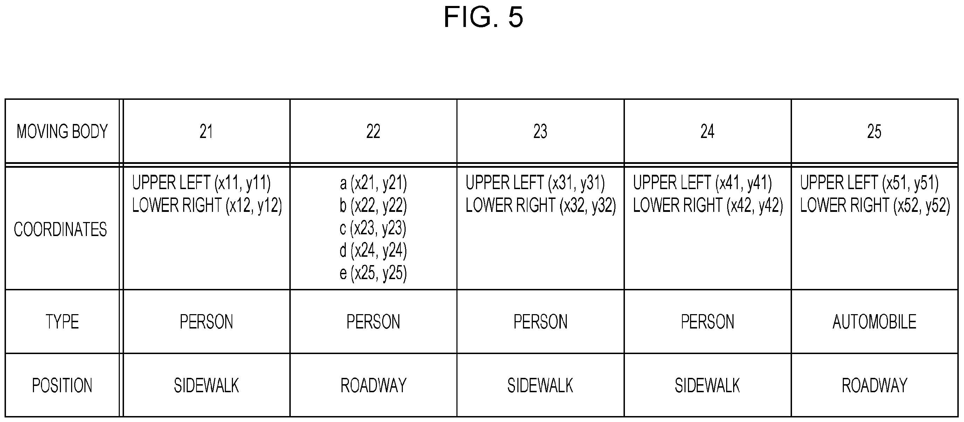

Fig. 3 is an explanatory diagram showing an example of an image that is stored in the image storage 121 according to Embodiment 1. Fig. 4 is an explanatory diagram showing training data according to Embodiment 1. Fig. 5 is an explanatory diagram showing annotations that are added by the annotation adder 122 according to Embodiment 1.

The image shown in Fig. 3 is an example of an image (training image) taken of moving bodies. This image may be an image actually taken in advance in the past by the camera situated on board the vehicle 11, an image taken by a common camera, or an image generated by drawing using a computer, i.e. CG (computer graphics). As the camera that is situated on board the vehicle 11, a fish-eye lens may be employed for a wider angle of view. Although an image acquired by a camera including a fish-eye lens may have a distortion in a part of the image, a similar explanation holds even in the case of a distorted image.

The image shown in Fig. 3 is one taken of moving bodies, namely persons 21, 22, 23, and 24 and an automobile 25. Of these moving bodies, the person 22, who is located on a roadway, and the automobile 25, which is located on a sidewalk, are considered to be target moving bodies that possibly constitute obstacles to the path of the vehicle 11, i.e. that possibly constitute obstacles to the running of the vehicle 11. Meanwhile, the persons 21, 23, and 24, who are located on sidewalks, are considered to be comparatively low in probability of constituting obstacles to the running of the vehicle 11.

The training image shown in Fig. 3 is provided to the annotation adder 122. Moreover, the annotation adder 122 adds annotations to the training image.

The addition of annotations to the training image shown in Fig. 3 is described with reference to Fig. 4.

The annotation adder 122 displays the image shown in Fig. 3 on the display device 14 through the controller 129 so that a user can see the image.

The user, who has seen the image shown in Fig. 3, recognizes the persons 21, 22, 23, and 24 and the automobile 25 as moving bodies shown in the image. Further, the user also recognizes sidewalks 31 and a roadway 32.

The user sets, for each of the moving bodies thus recognized, a frame that surrounds the moving body. For example, the user sets a frame 41 for the person 21, who is a moving body, via the input device 15. Similarly, the user sets frames 42, 43, 44, and 45 for the other moving bodies, namely the persons 22, 23, and 24 and the automobile 25, respectively. It should be noted that although the shapes of the frame 41 and the other frames are not limited to particular shapes, rectangles or polygons have an advantage that the shape and position of the frame 41 can be defined by a comparatively small amount of information. For example, a rectangular frame can be defined by two sets of coordinates (two-dimensional coordinates) of the upper left and lower right vertices of the rectangle, and a polygonal frame can be defined by the coordinates of each of the plurality of vertices. Once the user sets the frames, the annotation adder 122 acquires, as the coordinates of the moving bodies in the image, coordinates corresponding to the frames that the user has set.

Further, the user sets, via the input device 15 for each of the moving bodies thus recognized, the type of the moving body and the position in which the moving body is present. For example, since the person 21, who is a moving body, is a person who is on a sidewalk, the type of the moving body is set as "person" and the position is set as "sidewalk". Further, for the person 22, who is a moving body, the type of the moving body is set as "person" and the position is set as "roadway". Similar settings are configured for the persons 23 and 24, who are moving bodies, and the automobile 25, which is a moving body.

The annotation adder 122 receives through the controller 129 the settings configured by the user for the respective types and positions of the moving bodies. The respective coordinates, types, and positions of the moving bodies that the annotation adder 122 receives are described with reference to Fig. 5.

Fig. 5 shows, for each of the moving bodies, the coordinates of the moving body in the training image, the type of the moving body, and the position of the moving body. For example, for the person 21, who is a moving body, Fig. 5 shows that the coordinates are the coordinates (x11, y11) of the upper left vertex of the frame and the coordinates (x12, y12) of the lower right vertex, that the type is "person", and that the position is "sidewalk".

The following conceptually describes a learning process that is performed by the learner 127.

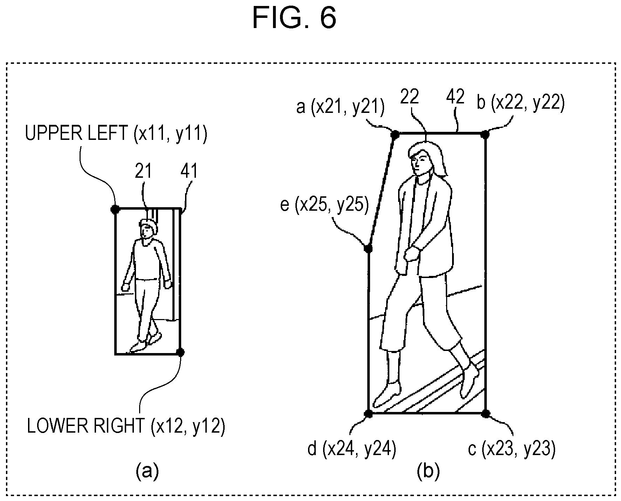

Fig. 6 illustrates explanatory diagrams showing a concept of learning of moving bodies according to Embodiment 1. Fig. 6(a) is an enlarged view of the frame 41 surrounding the person 21 of Fig. 5, and Fig. 6(b) is an enlarged view of the frame 42 surrounding the person 22 of Fig. 5.

The learner 127 learns the types and positions of the moving bodies in the training image by machine learning such as deep learning from the training data, i.e. the training image, and the coordinates, types, and positions of the moving bodies. Although the following shows an example of a method of learning by machine learning, another method can be employed, as various methods of learning have been studied.

For example, the learner 127 learns the types of the moving bodies according to images in the frames surrounding the moving bodies in the training image and the types of the moving bodies. At this point in time, for example, the features of the images of the moving bodies included in the training image may be used. Further, the learner 127 learns the position of the moving bodies according to the images in the frames surrounding the moving bodies in the training image and the positions of the moving bodies. Each of the positions of the moving bodies is any of a plurality of positions including the sidewalks and the roadway. The roadway may be subdivided into a side strip, an own-vehicle running lane, an oncoming-vehicle running lane, a crosswalk, and a parking space located on the roadway. For learning of the positions of the moving bodies, the features of images of the backgrounds of the moving bodies included in the training image. Note here that the feature of comparatively often including a pattern of the ground of a roadway or a sidewalk (such as an asphalt pavement, a concrete pavement, a while line of paint provided on a pavement, or gravel) and a pattern of a sky (such as a blue sky or a cloud) may be used for an image of the background of a moving body that is present on a roadway and the feature of comparatively often including a pattern of a building and a facility around a road may be used for an image of the background of a moving body that is present on a sidewalk.

The following describes the onboard equipment 110, which performs moving body detection, and the vehicle 11 mounted with the onboard equipment 110.

It should be noted that the frames surrounding the moving bodies may be set so as to surround the moving bodies in the training image with the backgrounds included. In other words, the coordinates of the moving bodies may be set so as to include coordinates indicating regions surrounding the moving bodies in the training image with the backgrounds included. Since the backgrounds of the moving bodies include information indicating the positions of the moving bodies, the position information of the moving bodies can be more highly accurately learned by learning the positions of the moving bodies on the basis of the images of the moving bodies including the backgrounds.

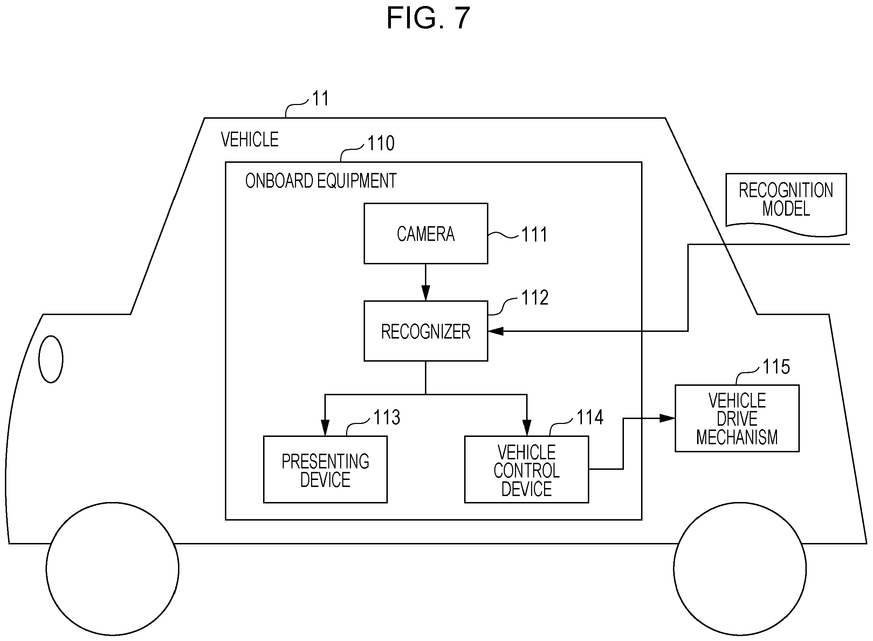

Fig. 7 is a block diagram showing a functional configuration of the vehicle 11.

The vehicle 11 includes the onboard equipment 110 and a vehicle drive mechanism 115.

The onboard equipment 110 includes a camera 111, a recognizer 112, and a presenting device 113, and a vehicle control device 114.

The camera 111 is situated on board the vehicle 11 so as to photograph the area around the vehicle 11. Specifically, the camera 111 is situated on board the vehicle 11 in such a position and orientation as to be able to photograph the area ahead of the vehicle 11. When having photographed the area ahead of the vehicle 11, the camera 111 outputs, to the recognizer 112, a photographed image that is an image which is generated by the photographing.

The recognizer 112 acquires a recognition model from the server 12 via the communication network 13 and retains the recognition model. Note here that the recognition model that the recognizer 112 acquires is a recognition model for recognizing a moving body in an image taken of the moving body, type information indicating the type of the moving body, and position information indicating that one of a plurality of positions including a sidewalk and a roadway in which the moving body is present. Further, the recognizer 112 acquires a photographed image that is an image which is generated by photographing the area ahead of the vehicle 11 with the camera 111 situated on board the vehicle 11. Moreover, the recognizer 112 detects a moving body in the photographed image by inputting the photographed image as input data into the recognition model. Specifically, the recognizer 112 detects a target moving body in the photographed image by acquiring the type information and position information of a moving body in the photographed image.

More specifically, the recognizer 112 acquires the type information and position information of a moving body in the photographed image and determines whether the type information and position information thus acquired satisfy predetermined conditions that are satisfied in a case where the moving body is a target moving body. Moreover, on the basis of a result of the determination, the recognizer 112 detects the moving body in the photographed image as a target moving body.

For example, in detecting a target moving body in the photographed image, the recognizer 112 detects a target moving body in the photographed image by acquiring type information indicating that the moving body is a person and position information indicating that the moving body is present on the roadway.

Further, for example, in detecting a target moving body in the photographed image, the recognizer 112 detects a target moving body in the photographed image by acquiring type information indicating that the moving body is an automobile, a motorcycle, or a bicycle and position information indicating that the moving body is present on the sidewalk.

The roadway may be subdivided into a side strip, an own-vehicle running lane, an oncoming-vehicle running lane, a crosswalk, and a parking space located on the roadway. For example, the recognizer 112 may detect, as a target moving image, a person who is present in the own-vehicle running lane and omit to detect, as a target moving body, a person who is present in the oncoming-vehicle running lane. This is because the person who is present in the own-vehicle running lane is comparatively higher in probability of constituting an obstacle to the running of the vehicle 11.

Furthermore, the recognizer 112 outputs, to the presenting device 113 and the vehicle control device 114, output data representing the moving body thus identified. The output data includes, for example, a presentation image that is an image obtained by superimposing, onto the photographed image, a figure (such as a frame or an arrow) indicating the moving body thus identified.

The presenting device 113 is a presenting device that presents information, and includes, for example, a display device such as a liquid crystal display device or a sound output device such as a speaker. A description is given here by taking, as an example, a case where the presenting device 113 is a display device.

Upon acquiring the output data from the recognizer 112, the presenting device 113 displays the output data as an image. Specifically, the presenting device 113 displays the presentation image obtained by superimposing, onto the photographed image, the figure indicating the moving body thus identified. The presentation image presents a driver of the vehicle 11 with the position of a detected target moving body in the photographed image taken by the camera 111.

The vehicle control device 114 is a control device that controls the drive of the vehicle 11 or, in particular, the acceleration and deceleration of the vehicle 11. For example, upon acquiring the output data from the recognizer 112, the vehicle control device 114 controls the vehicle 11 on the basis of the output data so that the vehicle 11 decelerates. Control of drive of the vehicle 11 is done by the vehicle drive mechanism 115.

The vehicle drive mechanism 115 is a control device that controls the drive of the vehicle 11. Under control of the vehicle control device 114, the vehicle drive mechanism 115 controls the drive or, specifically, acceleration and deceleration, steering, and the like of the vehicle 11.

The following describes a process that is executed by the moving body detecting system thus configured.

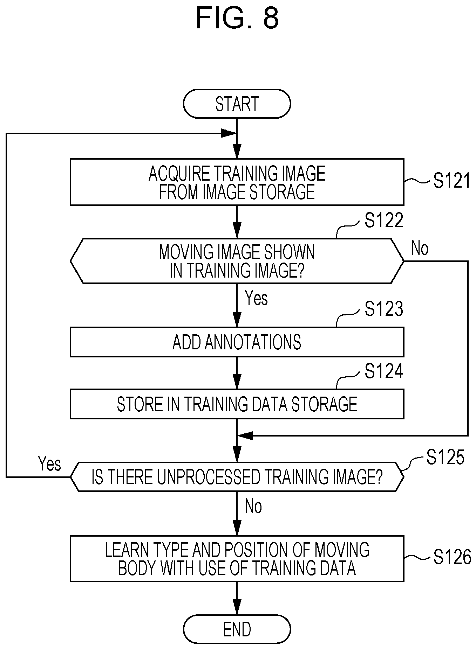

Fig. 8 is a flow chart showing a process pertaining to a moving body learning method that is performed by the server 12 according to Embodiment 1.

In step S121, the annotation adder 122 of the server 12 acquires a training image from the image storage 121.

In step S122, the annotation adder 122 determines, on the basis of an actuating signal or image processing, whether a moving image is shown in the training image acquired in step S121. If the annotation adder 122 has determined that a moving body is shown (Yes in step S122), the process proceeds to step S123, and if this is not the case (No in step S122), the process proceeds to step S125.

In step S123, the annotation adder 122 adds annotations to the training image acquired in step S121. The annotations include the coordinates, type information, and position information of the moving body in the training image.

In step S124, the annotation adder 122 stores the training image, to which the annotation adder 122 has added the annotations, as training data in the training data storage 123.

In step S125, the training data acquirer 120 determines whether the image storage 121 has a training image for which a determination has not been made as to whether a moving body is shown, i.e. an unprocessed training image. If it has been determined that there is an unprocessed training image (Yes in step S125), the unprocessed training image is subjected to the process starting from step S121. On the other hand, if it has been determined there is no unprocessed training image (No in step S125), the process proceeds to step S126.

In step S126, the learner 127 learns the type and position of the moving body in the training image with use of the training data stored in the training data storage 123. In this way, the learner 127 constructs a recognition model of the type and position of the moving body and stores the recognition model in the model storage 128.

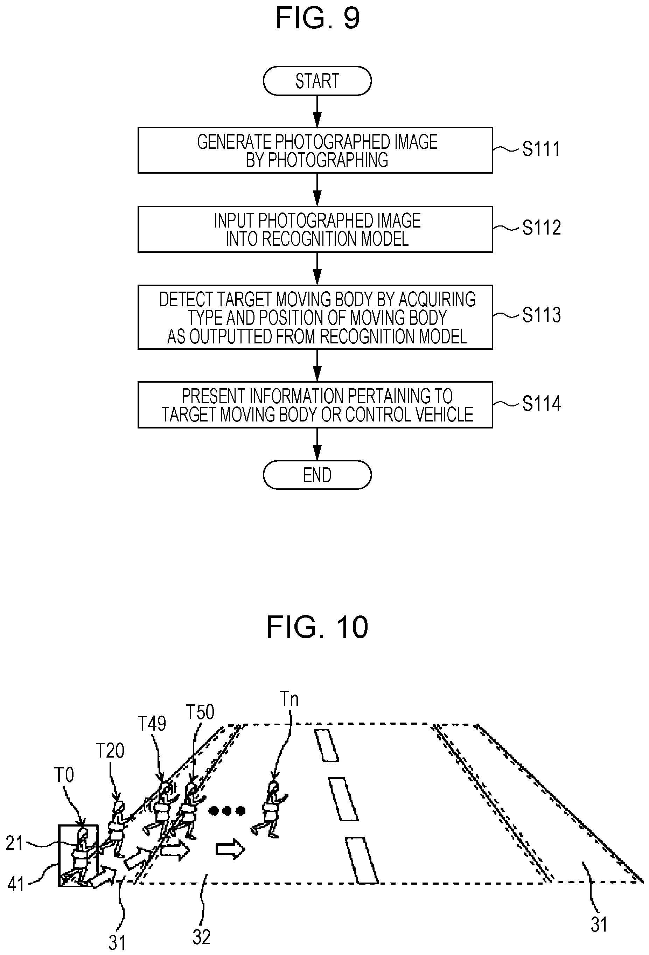

Fig. 9 is a flow chart showing a process pertaining to a moving body detecting method that is performed by the onboard equipment 110 according to Embodiment 1.

In step S111, the camera 111 of the onboard equipment 110 generates a photographed image by photographing.

In step S112, the recognizer 112 inputs the photographed image, which the camera 111 generated in step S111, as input data into the recognition model.

In step S113, the recognizer 112 obtains information that is outputted by inputting the photographed image into the recognition model in step S112. The information that is outputted from the recognition model includes the type information and position information of a moving body in the photographed image inputted into the recognition model in step S112. The recognizer 112 detects a target moving body in the photographed image by obtaining the information that is outputted from the recognition model.

In step S114, the onboard equipment 110 presents information pertaining to the target moving body or controls the vehicle 11 on the basis of the type information and position information of the moving body in the photographed image as obtained in step S113. The information pertaining to the moving body is presented by the presenting device 113. That is, for example, the presenting device 113 generates image data representing the type information and position information of the target moving body and presents an image on the basis of the image data thus generated. The presenting device 113 may generate audio data for notifying the user of the type information and the position information and outputs a sound on the basis of the audio data thus generated.

Further, the vehicle 11 is controlled by the vehicle control device 114. That is, for example, the vehicle control device 114 controls the vehicle 11 so that the vehicle 11 decelerates in order to avoid collision with the target moving body.

In the moving body detecting system 10 thus configured, a target moving body, located in the area ahead of the vehicle 11, which possibly constitutes an obstacle to the running of the vehicle 11 can be more highly accurately detected by the onboard equipment 110 with use of a recognition model pertaining to the type and position of a moving body as generated by machine learning by the server 12.

As noted above, according to the moving body detecting method according to Embodiment 1, a target moving body in a taken image is detected on the basis of a recognition model. Since this recognition model makes it possible to recognize a moving body in an image in which the moving body is shown and the type and position of the moving body, inputting the photographed image into this recognition model makes it possible to more highly accurately detect a target moving body in the photographed image. Thus, this moving body detecting method makes it possible to more highly accurately detect a target moving body that possibly constitutes an obstacle to the running of the vehicle.

Further, a recognition model constructed with use of training data to which annotations have been added, i.e. a recognition model constructed by learning the type and position of a moving body in an image in which the moving body is shown, is used. That is, the type and position of the moving body shown in the image are taught into the recognition model. For example, the type and position of a moving body is learned on the basis of the features, such as shape or color, of the moving body shown in an image, an image of the background of the moving body, or the like. Therefore, by inputting a photographed image into the recognition model, the type and position of a moving body in the photographed image thus inputted are appropriately detected. This may contribute to more highly accurate detection of a target moving body.

Further, more specifically, a person located on a roadway in a photographed image is detected as a target moving body that possibly constitutes an obstacle to the running of the vehicle.

Further, more specifically, an automobile, a motorcycle, or a bicycle located on a sidewalk in a photographed image is detected as a target moving body that possibly constitutes an obstacle to the running of the vehicle.

Further, more specifically, a moving body that possibly constitutes an obstacle to the running of the vehicle can be more highly accurately detected by using a neural network model as a recognition model.

Further, more specifically, a target moving body that possibly constitutes an obstacle to the running of the vehicle can be more highly accurately detected by using, as information indicated by annotations and indicating the type of a moving body, information indicating whether the moving body is a person, an automobile, a motorcycle, or a bicycle.

Further, with use of training data to which annotations have been added, a recognition model is constructed by learning the type and position of a moving body in an image in which the moving body is shown. That is, a recognition model into which the type and position of a moving body shown in an image have been taught is constructed. Accordingly, use of this recognition model makes it possible to more highly accurately detect a target moving body that possibly constitutes an obstacle to the running of the vehicle.

Further, by using a plurality of positions as the position of a moving body indicated by annotations, the position information of a moving body that is present across a plurality of positions can be more highly accurately learned.

Further, a region surrounding a moving body and its background is used as the position of the moving body indicated by annotations, and the position of the moving body is learned on the basis of an image of the moving body including the background. Since the background of the moving body includes information indicating the position of the moving body, the position information of the moving body can be more highly accurately learned by learning the position of the moving body on the basis of the image of the moving body including the background.

### Embodiment 2

In relation to a moving body detecting apparatus, a moving body detecting system, and the like that make it possible to more highly accurately detect a moving body that possibly constitutes an obstacle to the running of a vehicle, Embodiment 2 describes a moving body detecting apparatus and the like that make it possible to identify the position of a moving body in more detail and detect the moving body on the basis of the position thus identified in detail.

First, a target of detection that may be detected by a moving body detecting apparatus according to Embodiment 2 is described with reference to Fig. 10.

Fig. 10 is an explanatory diagram showing a target of detection of the moving body detecting system according to Embodiment 2.

Fig. 10 shows a person 21 as seen from the vehicle 11. The person 21 is an example of a person who is initially present on a sidewalk and then moves from the sidewalk onto a roadway. In Fig. 10, the signs, such as "T0" and "T20", assigned to arrows indicating the person, denote points of time. Note here that the points of time progress in the order of T0, T1, T2, T3, and so on and Fig. 10 shows the person 21 at some of those points of time.

As shown in Fig. 10, assume that the person 21 is located on the sidewalk at a point of past time before a point of time T50, moves from the sidewalk onto the roadway at the point of time T50, and then walks across the roadway.

In general, in moving from a sidewalk onto a roadway, a person takes an action (hereinafter also referred to as "preliminary action") such as an action of rotating his/her head in order to look to the sides or an action of decelerating or stopping his/her walking or running. In view of this, the moving body detecting system learns an action that a person takes for a predetermined period of time immediately before he/she moves from a sidewalk onto a roadway, thereby generating learning data that makes a preliminary action detectable. Moreover, the moving body detecting system according to Embodiment 2 detects, in an image that is taken during the running of the vehicle 11, a moving body that is taking a preliminary action, and makes a presentation to the driver or controls the vehicle 11.

The moving body detecting system according to Embodiment 2 is substantially identical in configuration to the moving body detecting system 10 according to Embodiment 1 but differs in terms of the process that is performed by the annotation adder 122 and the learner 127 of the server 12. Further, it also differs in terms of the process that is performed by the recognizer 112 of the onboard equipment 110. The following describes differences from the moving body detecting system 10 according to Embodiment 1.

In Embodiment 2, a training image includes a plurality of photographed images serially taken of a moving body on a time-series basis. The image storage 121 acquires a plurality of photographed images serially taken of a moving body on a time-series basis.

Annotations that the annotation adder 122 according to Embodiment 2 adds to a training image include identification information that is unique to the moving body. That is, the annotations that the annotation adder 122 according to Embodiment 2 adds include identification information in addition to the coordinates, type information, and position information of the moving body. Moreover, a training image to which the annotation adder 122 has added annotations is stored as training data in the training data storage 123.

The term "identification information" refers to an identifier that makes one moving body (e.g. the person 21) distinguishable from another moving body. The addition of identification information as annotations to a training image makes it possible to identify an identical moving body across a plurality of photographed images serially taken on a time-series basis.

Further, on the basis of training data stored in the training data storage 123, the annotation adder 122 adds preliminary information to that one of images including a moving body moving from a sidewalk onto a roadway which falls within a predetermined period of time immediately before a point of time where the moving body moves from the sidewalk onto the roadway. The term "preliminary action information" here means information indicating that the moving body is taking a preliminary action.

An image to which the annotation adder 122 adds preliminary action information may be an image including only a person crossing the running lane in which the vehicle 11 is running, i.e. an image not including a person who does not cross the running lane. That is, of a plurality of images included in training data, an image taken of a person crossing the running lane may be one to which annotations further including preliminary action information have been added. This enables the moving body detecting system 10 to, by recognizing the behavior of a person who is about to step onto a roadway, preliminarily predict someone running out onto a roadway.

The learner 127 according to Embodiment 2 learns the type and position of a moving body and the presence or absence of a preliminary action with use of training data. That is, the learner 127 constructs a recognition model by learning the type, position, and preliminary action of a moving body in a training image with use of the training data stored in the training data storage 123. Note here that since annotations including identification information have been added to the training data by the annotation adder 122, an identical moving body is identified across plural pieces of training data so that a movement and action of the moving body may be recognized. This makes it possible to learn a point of time where the moving body moves from the sidewalk onto the roadway and learn, as a preliminary action, the action of the moving body within a predetermined period of time immediately before the point of time.

The recognizer 112 according to Embodiment 2 acquires a photographed image by means of photographing of the area ahead of the vehicle with the camera 111, inputs the photographed image as input data into a recognition model, and thereby detects a moving body in the photographed image. The recognition model that the recognizer 112 uses is a recognition model, generated by learning by the learner 127, which allows recognition of the presence or absence of a preliminary action of a moving body. Accordingly, the recognizer 112 acquires the type information, position information, and action information of a moving body in a photographed image and thereby detects a target moving body on the basis of the type and position of the moving body in the photographed image and whether the moving body is taking a preliminary action.

In detecting a target moving body, a target moving body in a photographed image may be detected by acquiring type information indicating that a moving body is a person, position information indicating that the moving body is present on a sidewalk, and action information indicating that the moving body is taking a preliminary action that the moving body takes a predetermined period of time before the moving body moves from the sidewalk into a roadway.

Further, in detecting a target moving body, a target moving body in a photographed image may be detected by acquiring type information indicating that a moving body is an automobile or a motorcycle, position information indicating that the moving body is present on a roadway, and action information indicating that the moving body is taking a preliminary action that the moving body takes a predetermined period of time before the moving body enters the running lane of the target vehicle in an area ahead of the target vehicle.

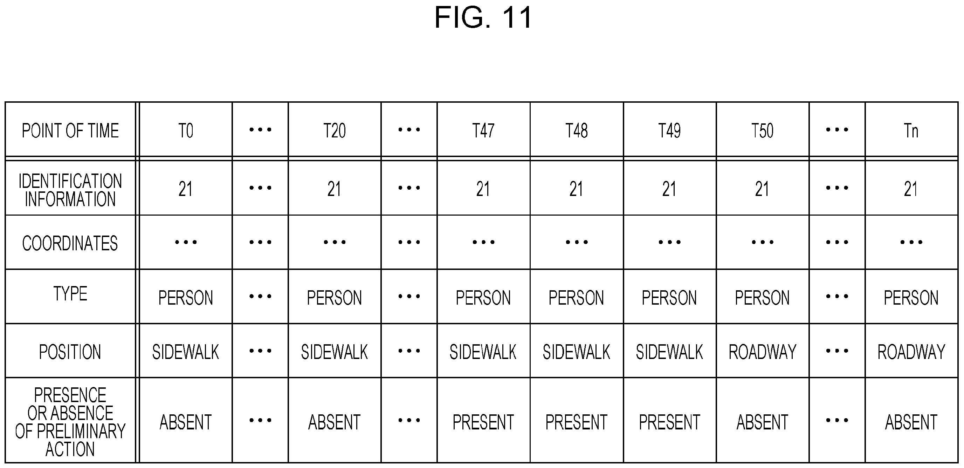

Fig. 11 is an explanatory diagram showing annotations that are added to a training image by the annotation adder 122 according to Embodiment 2.

The annotation adder 122 receives the identifier of each moving body, the type of each moving body, the coordinates of each moving body in an image, and the position of each moving body through the controller 129 as inputted by the user. The identifier of each moving body, the type of each moving body, the coordinates of each moving body in an image, and the position of each moving body as received by the annotation adder 122 are described with reference to Fig. 11. It should be noted that the description assumes that the identifier of the person 21, who is a moving body, is "21", which is identical to the sign.

Fig. 11 shows the identifier of each moving body, the type of each moving body, the coordinates of each moving body in an image, and the position of each moving body. For example, Fig. 11 shows that, at a point of time T49, the identifier, type, and position of the moving body are "21", "person", and "roadway", respectively. As in Fig. 5, the coordinates are designated by the coordinates of the upper left vertex of the image and the coordinates of the upper right vertex (not illustrated).

Further, Fig. 11 shows that, at the point of time T50, the identifier, type, and position of the moving body are "21", "person", and "roadway", respectively.

Further, the annotation adder 122 adds preliminary action information to that one of images including a moving body moving from a sidewalk onto a roadway which falls within a predetermined period of time immediately before a point of time where the moving body moves from the sidewalk onto the roadway. In this example, information to the effect that a preliminary action is "present" is added to an image including a moving body taking a preliminary action and information to the effect that a preliminary action is "absent" is added to an image not including a moving body taking a preliminary action. Specifically, information to the effect that a preliminary action is "present" is added to each image falling within a period of time from a point of time T47 to the point of time T49. Note here that the predetermined period of time immediately before the point of time where the moving body moves from the sidewalk onto the roadway is equivalent to the period of time from the point of time T47 to the point of time T49.

The learner 127 reads, from the training data storage 123, training data to which such annotations have been added. Moreover, the learner 127 identifies the person 21 as one moving body across a plurality of photographed images with use of the identifier, acquires a movement and action of the moving body, and thereby learns a preliminary action of the moving body. As with the learner 127 according to Embodiment 1, the learner 127 also learns the type and position of the moving body. In this way, the learner 127 constructs a recognition model and stores the recognition model in the model storage 128.

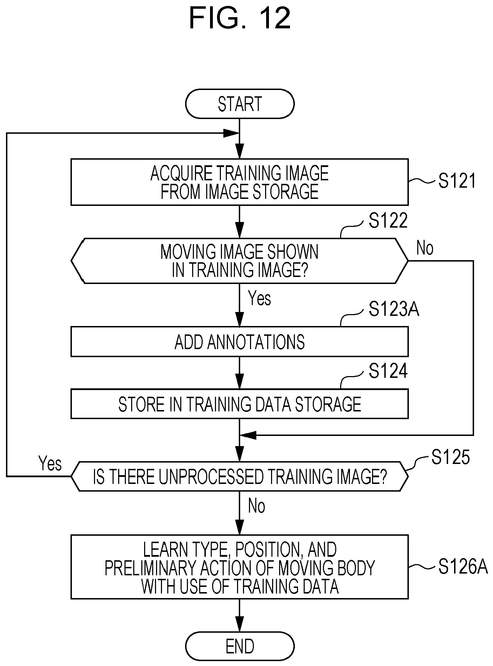

Fig. 12 is a flow chart showing a process that is performed by the server 12 according to Embodiment 2.

Steps S123A and S126A of the flow chart of Fig. 12 are different from steps S123 and S126 of the process (see Fig. 8) that is performed by the server 12 according to Embodiment 1. In other respects, the process that is performed by the server 12 according to Embodiment 2 is identical to the process that is performed by the server 12 according to Embodiment 1.

In step S123A, as in step S123, the annotation adder 122 adds annotations to the training image acquired in step S121 and temporarily stores the training image in the training data storage 123. Further, on the basis of training data stored in the training data storage 123, the annotation adder 122 adds preliminary information to that one of images including a moving body moving from a sidewalk onto a roadway which falls within a predetermined period of time immediately before a point of time where the moving body moves from the sidewalk onto the roadway.

In step S126A, the learner 127 learns the type, position, and preliminary action of the moving body with use of the training data stored in the training data storage 123. In this way, the learner 127 constructs a recognition model of the type, position, and preliminary action of the moving body and stores the recognition model in the model storage 128.

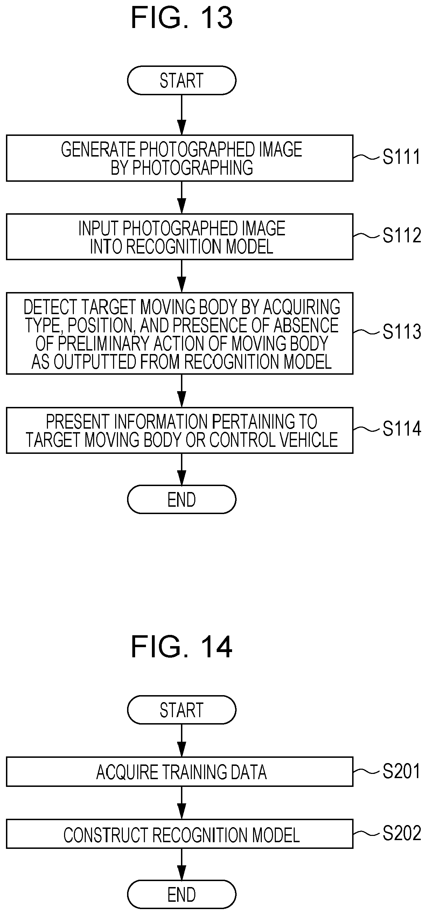

Fig. 13 is a flow chart showing a process that is performed by the onboard equipment 110 according to Embodiment 2.

Step S113A of the flow chart of Fig. 13 is different from step S113 of the process (see Fig. 9) that is performed by the onboard equipment 110 according to Embodiment 1. In other respects, the process that is performed by the onboard equipment 110 according to Embodiment 2 is identical to the process that is performed by the onboard equipment 110 according to Embodiment 1.

In step S113A, the recognizer 112 obtains information that is outputted by inputting the photographed image into the recognition model in step S112. The information that is outputted from the recognition model includes the type information, the position information, and the presence or absence of a preliminary action of a moving body in the photographed image inputted into the recognition model in step S112. The recognizer 112 detects a target moving body in the photographed image by obtaining the information that is outputted from the recognition model.

As noted above, according to the moving body detecting method according to Embodiment 2, a target moving body in a photographed image is detected on the basis of a recognition model constructed by learning with further use of a preliminary action of a moving body. Since identification information of the moving body has been further added, this recognition model is one constructed by learning the preliminary action on the basis of an action of the moving body across a plurality of images. That is, in addition to the type and position of a moving body shown in an image, a preliminary action of the moving body is taught into the recognition model. For example, a preliminary action (more specifically, a head-rotating action of a person, deceleration or stoppage of walking or running, blinking of a lamp of an automobile, or a similar action) of a moving body shown across a plurality of images and a movement (more specifically, a movement of a person from a sidewalk toward a roadway, a movement of an automobile from another running lane into the running lane of the vehicle, or a similar movement) of the moving body are taught. Therefore, by inputting a photographed image into the recognition model, the type, the position, and the presence or absence of a preliminary action of a moving body in the photographed image thus inputted are appropriately detected. This may contribute to more highly accurate detection of a target moving body.

Further, more specifically, a person who is about to move from a sidewalk onto a roadway in a photographed image is detected as a target moving body that possibly constitutes an obstacle to the running of the vehicle.

Further, more specifically, an automobile or the like that is about to enter the running lane of the target vehicle in a photographed image is detected as a target moving body that possibly constitutes an obstacle to the running of the vehicle.

Further, according to the moving body detecting method according to Embodiment 2, a recognition model is constructed by learning with further use of a preliminary action of a moving body. Since identification information of the moving body has been further added, this recognition model is constructed by learning the preliminary action on the basis of an action of the moving body across a plurality of images. Accordingly, use of this recognition model makes it possible to more highly accurately detect a target moving body that possibly constitutes an obstacle to the running of the vehicle.

Further, in learning the type, position, and preliminary action of a moving body, a recognition model is constructed by learning with use of training data obtained by adding annotations including preliminary action information to an image including a person crossing a running lane. This makes it possible to, by recognizing the behavior of a person who is about to step onto a roadway, preliminarily predict someone running out onto a roadway.

### Modification of Each of the Embodiments

Some or all of the moving body detecting system and the like according to each of the foregoing embodiments are described in the following way but are not limited to the following description.

Fig. 14 is a flow chart showing a moving body learning method according to a modification of each of the embodiments.

As shown in Fig. 14, the moving body learning method according to a modification of each of the embodiments is a moving body learning method for, by means of at least one computer, detecting a target moving body that possibly constitutes an obstacle to running of a target vehicle, including: acquiring training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present (step S201); and constructing a recognition model by learning the type information and position information of the moving body in the image with use of the training data (step S202).

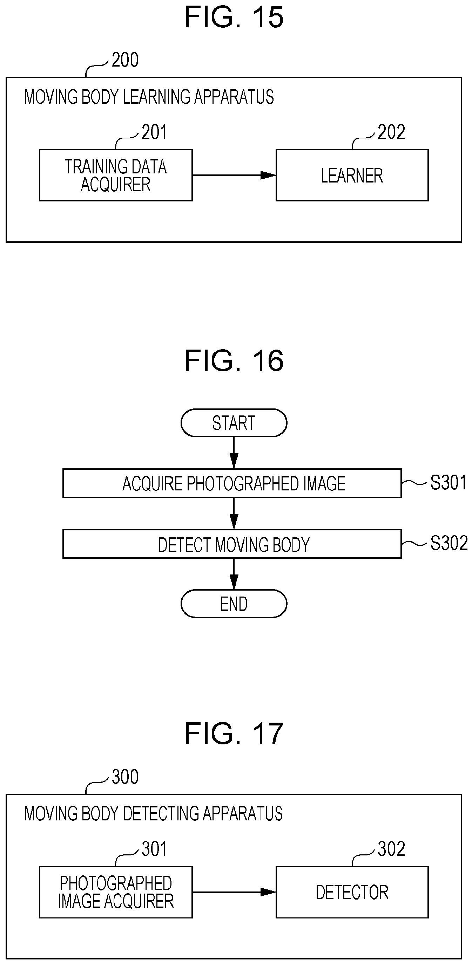

Fig. 15 is a block diagram showing a moving body learning apparatus 200 according to a modification of each of the embodiments.

As shown in Fig. 15, the moving body learning apparatus 200 according to a modification of each of the embodiments is a moving body learning apparatus 200 in which at least one computer learns a target moving body that possibly constitutes an obstacle to running of a vehicle, including: a training data acquirer 201 that acquires training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; and a learner 202 that constructs a recognition model by learning the type information and position information of the moving body in the image with use of the training data.

Fig. 16 is a flow chart showing a moving body detecting method according to a modification of each of the embodiments.

As shown in Fig. 16, the moving body detecting method according to a modification of each of the embodiments is a moving body detecting method for, by means of at least one computer, detecting a target moving body that possibly constitutes an obstacle to running of a target vehicle, including: acquiring a photographed image that is generated by photographing an area ahead of the target vehicle with a camera situated on board the target vehicle (step S301); and detecting the target moving body in the photographed image by acquiring type information and position information of a moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present (step S302).

Fig. 17 is a block diagram showing a moving body detecting apparatus 300 according to a modification of each of the embodiments.

As shown in Fig. 17, the moving body detecting apparatus 300 according to a modification of each of the embodiments is a moving body detecting apparatus 300 for, by means of at least one computer, detecting a target moving body that possibly constitutes an obstacle to running of a target vehicle, including: a photographed image acquirer 301 that acquires a photographed image that is generated by photographing an area ahead of the target vehicle with a camera situated on board the target vehicle; and a detector 302 that detects a moving body in the photographed image by acquiring type information and position information of the moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present.

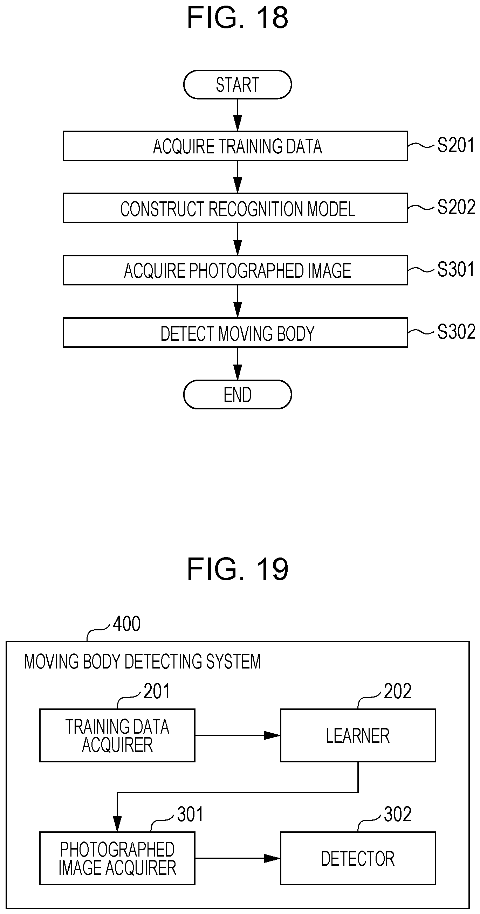

Fig. 18 is a flow chart showing a moving body detecting method according to a modification of each of the embodiments.

As shown in Fig. 18, the moving body detecting method according to a modification of each of the embodiments is a moving body detecting method for, by means of at least one computer, detecting a target moving body that possibly constitutes an obstacle to running of a vehicle, including: acquiring training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present (step S201); constructing a recognition model by learning the type information and position information of the moving body in the image with use of the training data (step S202); acquiring a photographed image that is generated by photographing an area ahead of the target vehicle with a camera situated on board the target vehicle (step S301); and detecting a moving body in the photographed image by acquiring type information and position information of the moving body in the photographed image, the type information and position information of the moving body in the photographed image being outputted by inputting the photographed image as input data into a recognition model for recognizing a moving body that possibly constitutes an obstacle to the running of the vehicle, type information indicating a type of the moving body, and position information indicating that one of a plurality of positions including a sidewalk and a roadway in which the moving body is present (step S302).

Fig. 19 is a block diagram showing a moving body detecting system 400 according to a modification of each of the embodiments.

As shown in Fig. 19, the moving body detecting system 400 according to a modification of each of the embodiments is a moving body detecting system 400 for, by means of at least one computer, detecting a moving body that possibly constitutes an obstacle to running of a target vehicle, including: a training data acquirer 201 that acquires training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; a learner 202 that constructs a recognition model by learning the type information and position information of the moving body in the image with use of the training data; a photographed image acquirer 301 that acquires a photographed image that is generated by photographing an area ahead of the target vehicle with a camera situated on board the target vehicle; and a detector 302 that detects the moving body in the photographed image by acquiring type information and position information of the moving body in the photographed image, the type information and position information of the moving body in the photographed image being outputted by inputting the photographed image as input data into a recognition model for recognizing a moving body that possibly constitutes an obstacle to the running of the vehicle, type information indicating a type of the moving body, and position information indicating that one of a plurality of positions including a sidewalk and a roadway in which the moving body is present.

It should be noted that, in each of the embodiments, each constituted element may be configured by dedicated hardware or realized by executing a software program suited to that constituted element. Each constituent element may be realized by a program executor such as a CPU or a processor reading out a software program stored on a recording medium such as a hard disk or a semiconductor memory. Note here that a software that realizes the moving body learning apparatus, the moving body detecting apparatus, and the like according to each of the embodiments is the following program.

That is, this program causes a computer to execute a moving body detecting method for, by means of at least one computer, detecting a target moving body that is a moving body which possibly constitutes an obstacle to running of a target vehicle, including: acquiring a photographed image that is generated by photographing with a camera situated on board the target vehicle; and detecting the target moving body in the photographed image by acquiring type information and position information of a moving body in the photographed image, the type information and position information of the moving body in the photographed image being outputted by inputting the photographed image as input data into a recognition model for recognizing the moving body in an image taken of the moving body, the type information indicating a type of the moving body, and the position information indicating that one of a plurality of positions including a sidewalk and a roadway in which the moving body is present.

Further, this program causes a computer to execute a moving body learning method for, by means of at least one computer, detecting a target moving body that is a moving body which possibly constitutes an obstacle to running of a target vehicle, including: acquiring training data obtained by adding annotations to an image taken of a moving body, the annotations being information including (a) coordinates of the moving body in the image, (b) type information indicating a type of the moving body, and (c) position information indicating that one of a plurality of positions including a sidewalk and a roadway in which the moving body is present; and constructing a recognition model by learning the type information and position information of the moving body in the image with use of the training data.

Although the foregoing has described a moving body detecting method and the like according to one more aspects with reference to embodiments, the present disclosure is not limited to these embodiments. Embodiments based on the application to the present embodiment of various modifications conceived of by persons skilled in the art and embodiments based on combinations of constituent elements of different embodiments are encompassed in the scope of the one or more aspects, provided such embodiments do not depart from the spirit of the present disclosure.

The present disclosure is applicable to a moving body detecting method that makes it possible to more highly accurately detect a moving body that possibly constitutes an obstacle to the running of a vehicle. More specifically, the present disclosure is applicable to a control device or similar device that is situated on board a self-guided vehicle.

## Claims

1. A computer implemented detecting method for detecting a target moving body that possibly constitutes an obstacle to running of a target vehicle, comprising:
acquiring an image that is generated by capturing with a camera which is on board the target vehicle;
inputting the image as input data into a recognition model for recognizing (i) a moving body in a recognition image in which the moving body is captured, (ii) type information indicating a type of the moving body, and (iii) position information indicating that one of a plurality of positions including a sidewalk and a roadway in which the moving body is present;
acquiring (i) the type information and (ii) the position information of the moving body in the image, the type information and the position information being outputted from the recognition model; and
detecting the target moving body in the image using the type information and position information of the moving body in the image.

2. The computer implemented detecting method according to Claim 1, wherein the recognition model is constructed by:
acquiring training data obtained by adding annotation to the recognition image, the annotation includes (a) coordinates of the moving body in the image, (b) type information indicating a type of the moving body, and (c) position information indicating that one of a plurality of positions including a sidewalk and a roadway in which the moving body is present; and
learning the type information and the position information of the moving body in the image using the training data.

3. The computer implemented detecting method according to Claim 1, wherein the detecting includes detecting the target moving body in the image by acquiring (i) the type information indicating that the moving body in the image is a person and (ii) the position information indicating that the moving body is present on the roadway.

4. The computer implemented detecting method according to Claim 1, wherein the detecting includes detecting the target moving body in the image by acquiring (i) the type information indicating that the moving body in the image is an automobile, a motorcycle, or a bicycle and (ii) the position information indicating that the moving body is present on the sidewalk.

5. The computer implemented detecting method according to Claim 2, wherein the acquiring of the image includes acquiring a plurality of images serially captured on a time-series basis,
the acquiring of the training data includes further acquiring (d) the training data to which the annotation including identification information of the moving body have been added,
the recognition model is constructed by further learning, using the training data, a preliminary action that is a predetermined action which the moving body takes a predetermined period of time before the moving body becomes an obstacle to the running of the vehicle, and
the detecting includes detecting the target moving body in the plurality of images by further acquiring action information indicating presence or absence of the preliminary action of the moving body in the plurality of images, the action information being outputted by inputting the plurality of images as input data into the recognition model.

6. The computer implemented detecting method according to Claim 5, wherein the detecting includes detecting the target moving body in the image by acquiring the type information indicating that the moving body in the image is a person, the position information indicating that the moving body is present on the sidewalk, and the action information indicating that the moving body is taking the preliminary action that the moving body takes the predetermined period of time before the moving body moves from the sidewalk onto the roadway.

7. The computer implemented detecting method according to Claim 5, wherein the detecting includes detecting the target moving body in the image by acquiring the type information indicating that the moving body in the image is an automobile or a motorcycle, the position information indicating that the moving body is present on the roadway, and the action information indicating that the moving body is taking the preliminary action that the moving body takes the predetermined period of time before the moving body enters a running lane of the target vehicle in an area ahead of the target vehicle.

8. The computer implemented detecting method according to Claim 1, wherein the recognition model is a neural network model.

9. The computer implemented detecting method according to Claim 2, wherein the type information indicates whether the moving body is a person, an automobile, a motorcycle, or a bicycle.

10. A computer implemented learning method for detecting a target moving body that possibly constitutes an obstacle to running of a target vehicle, comprising:
acquiring training data obtained by adding annotation to a recognition image in which a moving body is captured, the annotation including (a) coordinates of the moving body in the image, (b) type information indicating a type of the moving body, and (c) position information indicating that one of a plurality of positions including a sidewalk and a roadway in which the moving body is present; and
constructing a recognition model by learning the type information and position information of the moving body in the image using the training data.

11. The computer implemented learning method according to Claim 10, wherein the acquiring includes acquiring the training data obtained by adding annotations, to each of a plurality of images each of which the moving body is captured, each of the annotations includes (a) the coordinates, (b) the type information, (c) the position information, and (d) identification information that makes the moving body uniquely identifiable, and
the constructing includes constructing the recognition model by further learning, using the training data, a preliminary action that the moving body takes a predetermined period of time before the moving body becomes an obstacle to the running of the vehicle.

12. The computer implemented learning method according to Claim 11, wherein in a case that a person crossing a running lane is captured in one of the plurality of images included in the training data, the annotation in the one of the plurality of images further includes preliminary action information, the preliminary action information indicating that a moving body taking a preliminary action is included.

13. The computer implemented learning method according to Claim 10, wherein the position information indicates those two or more of the positions including the sidewalk and the roadway in which the moving body is present.

14. The computer implemented learning method according to Claim 10, wherein the coordinates of the moving body include coordinates indicating a region surrounding the moving body in the image including a background.

15. A detecting apparatus for detecting a target moving body that possibly constitutes an obstacle to running of a target vehicle, comprising:
a processor; and
a memory storing thereon a computer program, which when executed by the processor, causes the processor to perform operations including:
acquiring an image that is generated by capturing with a camera which is on board the target vehicle;
inputting the image as input data into a recognition model for recognizing (i) a moving body in a recognition image in which the moving body is captured, (ii) type information indicating a type of the moving body, and (iii) position information indicating that one of a plurality of positions including a sidewalk and a roadway in which the moving body is present;
acquiring the type information and the position information of the moving body in the image, the type information and the position information of the moving body in the image being outputted from the recognition model; and
detecting the target moving body in the image using the type information and the position information of the moving body in the image.

16. A learning apparatus for detecting a target moving body that possibly constitutes an obstacle to running of a target vehicle, comprising:
a processor; and
a memory storing thereon a computer program, which when executed by the processor, causes the processor to perform operations including:
acquiring training data obtained by adding annotation to an image in which a moving body is captured, the annotation including (a) coordinates of the moving body in the image, (b) type information indicating a type of the moving body, and (c) position information indicating that one of a plurality of positions including a sidewalk and a roadway in which the moving body is present; and
constructing a recognition model by learning the type information and the position information of the moving body in the image using the training data.

17. A detecting system for detecting a target moving body that possibly constitutes an obstacle to running of a target vehicle, comprising:
a processor; and
a memory storing thereon a computer program, which when executed by the processor, causes the processor to perform operations including:
acquiring training data obtained by adding annotation to a recognition image in which a moving body is captured, the annotation including (a) coordinates of the moving body in the image, (b) type information indicating a type of the moving body, and (c) position information indicating that one of a plurality of positions including a sidewalk and a roadway in which the moving body is present;
constructing a recognition model by learning the type information and the position information of the moving body in the image using the training data;
acquiring an image that is generated by capturing with a camera which is on board the target vehicle;
inputting the image as input data into the recognition model;
acquiring the type information and the position information of the moving body in the image, the type information and the position information of the moving body in the image being outputted from the recognition model; and
detecting the moving body in the image using the type information and the position information of the moving body in the image.

18. A non-transitory recording medium storing thereon a computer program for learning a moving body that possibly constitutes an obstacle to running of a vehicle, which when executed by the processor, causes the processor to perform operations including:
acquiring training data obtained by adding annotation to a recognition image in which a moving body is captured, the annotation including (a) coordinates of the moving body in the image, (b) type information indicating a type of the moving body, and (c) position information indicating that one of a plurality of positions including a sidewalk and a roadway in which the moving body is present; and
constructing a recognition model by learning the type information and the position information of the moving body in the image using the training data.
